# EUROPEAN PATENT SPECIFICATION

(11) **EP 4 378 759 B1**
(45) Date of publication and mention of the grant of the patent: **09.04.2025**
(21) Application number: 22211263.3
(22) Date of filing: 02.12.2022
(51) Int. Cl.: B60R 1/26

(54) **METHOD AND COMPUTER PROGRAM PRODUCT OF OPERATING DISPLAY SYSTEM OF MOTOR VEHICLE**
VERFAHREN UND COMPUTERPROGRAMMPRODUKT ZUM BETRIEB EINES ANZEIGESYSTEMS EINES KRAFTFAHRZEUGS
PROCÉDÉ ET PRODUIT DE PROGRAMME INFORMATIQUE DE SYSTÈME D'AFFICHAGE DE FONCTIONNEMENT DE VÉHICULE À MOTEUR

(43) Date of publication of application: 05.06.2024
(73) Proprietor: VOLVO TRUCK CORPORATION, 405 08 Göteborg (SE)
(72) Inventor: Berne, Nicolas, 436 44 Askim (SE); Rachidi, Mohammed, 416 66 Göteborg (SE)
(74) Representative: Valea AB

(56) References cited:
- US-A1- 2005 093 975
- US-B2- 9 854 209

## Description

### TECHNICAL FIELD

The present disclosure generally refers to motor vehicles. In particular aspects, the disclosure relates to a method and a computer program product of operating a display system of a motor vehicle. The disclosure can be applied in heavy-duty vehicles, such as trucks, buses, and construction equipment. Although the disclosure may be described with respect to a particular vehicle, the disclosure is not restricted to any particular vehicle or type of vehicle.

### BACKGROUND

Generally speaking, a side view mirror is externally mounted on a motor vehicle adjacent to vehicle doors for enabling a driver to see beside and/or behind the motor vehicle. An angle of the side view mirror is manually or remotely adjustable so as to provide adequate coverage for a driver. A side view mirror may be electrically heated and may be dimmable. Although the field of view of a side view mirror is typically adjustable by the driver of the vehicle by changing the position and/or orientation of the side view mirror, the field of view is typically set and left in place regardless of driving conditions. As a result, turn collisions with objects while a motor vehicle is turning might happen if the field of view of the side view mirror is not set correctly for actual driving conditions. The closest prior art document US9854209B2 discloses a method of operating a computer system of a motor vehicle, the method comprising: receiving, via a processor device of the computer system, camera image data captured by a side view camera of the motor vehicle, the camera image data comprising a camera field of view; displaying display image data on a display screen, the display image data comprising a display field of view of at least a portion of the camera field of view of the camera image data; and adjusting the display field of view during a turning operation of the motor vehicle.

### SUMMARY

According to a first aspect of the disclosure, a method of operating a computer system of a motor vehicle includes receiving, via a processor device of the computer system, camera image data captured by a side view camera of the motor vehicle, the camera image data comprising a camera field of view, displaying display image data on a display screen, the display image data comprising a display field of view of at least a portion of the camera field of view of the camera image data, and adjusting the display field of view during a turning operation of the motor vehicle based on a lift axle position of at least one lift axle of the motor vehicle. The first aspect of the disclosure may seek to provide a side view image to an operator of the vehicle during a turning operation that is adjusted based on a turning radius of the moto vehicle. A technical benefit may include improved operation of the motor vehicle and a reduced likelihood of collision.

According to an example, adjusting the display field of view maintains an end corner of the motor vehicle within the display field of view during the turning operation. A technical benefit may include improved operation of the motor vehicle and a reduced likelihood of collision.

According to an example, adjusting the display field of view comprises at least one of digitally resizing, digitally panning, and digitally rotating the display field of view within the camera field of view. A technical benefit may include enabling the image displayed to the operator to be adjusted without physically moving the camera.

According to an example, adjusting the display field of view comprises mechanically adjusting the side view camera based on the lift axle position of the at least one lift axle. A technical benefit may include enabling the camera to capture a larger field of view than would be possible with a fixed position.

Mechanically adjusting the side view camera may comprise panning the side view camera. A technical benefit may include enabling the camera to capture a wider field of view than would be possible with a fixed position.

According to an example, adjusting the display field of view based on the lift axle position is performed by adjusting, via the processor device, the display field of view based on a rear turning point of the motor vehicle. A technical benefit may include enabling adjustment of the display field of view based on an actual location of a rear corner of the motor vehicle.

A center point between fixed axle points of at least two fixed axles of the motor vehicle may be designated as the rear turning point in response to the lift axle position being in a raised position. A technical benefit may include enabling adjustment of the display field of view based on an actual turning radius of the motor vehicle.

According to an example, adjusting the display field of view based on the lift axle position is performed by adjusting, via the processor device, the display field of view based on a turning radius of the motor vehicle. A technical benefit may include enabling adjustment of the display field of view based on an actual turning radius of the motor vehicle.

According to an example, adjusting the display field of view based on the lift axle position is performed by adjusting, via the processor device, the display field of view based on a distance between a front axle point of a front axle of the motor vehicle and a rear turning point of the motor vehicle. The distance may be combined from a front distance between an intermediate axle point of an intermediate axle of the motor vehicle and the front axle point and a rear distance between a hitching point of a hitch of the motor vehicle and the rear turning point. A technical benefit may include improved operation of the motor vehicle and a reduced likelihood of collision.

The front axle and the intermediate axle may be mounted on a towing vehicular part of the motor vehicle, and the at least one lift axle may be mounted on a towed vehicular part of the motor vehicle. According to an example, adjusting the display field of view based on the lift axle position is performed by adjusting, via the processor device, the display field of view based on the distance and a relative angle between the towing vehicular part and the towed vehicular part. A technical benefit may include enabling adjustment of the display field of view based on the presence of a towed vehicular part.

The method may further comprise sensing the lift axle position by a lift axle position sensing device of the computer system. The lift axle position may be determined by a wheel position of at least one wheel of the motor vehicle sensed by a wheel position sensing device of the computer system, and the at least one wheel may be connected with the at least one lift axle. A technical benefit may include automatically determining the lift axle position.

According to an example, the lift axle position is determined by a wheel rotation status of at least one wheel sensed by a wheel rotation sensing device of the computer system, and the at least one wheel is connected with the at least one lift axle. A technical benefit may include automatically determining the lift axle position without need of a lift axle position sensor.

A method of operating a computer system of a motor vehicle according to further examples includes determining, via a processor device, a lift axle position of at least one lift axle of the motor vehicle, adjusting, via the processor device, an image captured by a side view camera of the vehicle during a turning operation of the motor vehicle based on the lift axle position of at least one lift axle of the motor vehicle, and displaying the adjusted image on a display screen of the vehicle. A technical benefit may include improved operation of the motor vehicle and a reduced likelihood of collision.

According to an example, adjusting the image comprises adjusting, via the processor device, at least one of an azimuth angle and an altitude angle of the side view camera.

According to an example, adjusting the image comprises applying, via the processor device, at least one of digitally resizing (132a), digitally panning (132b) and digitally rotating (132c) at least a portion of the image captured by the side view camera. A technical benefit may include enabling the image displayed to the operator to be adjusted without physically moving the camera.

According to an example, adjusting the image comprises mechanically panning the side view camera. A technical benefit may include enabling the camera to capture a larger field of view than would be possible with a fixed position.

According to an example, adjusting the image is performed to maintain an end corner of the motor vehicle falling within a field of view of a data region of the image that is displayed on the display screen during the turning operation.. A technical benefit may include improved operation of the motor vehicle and a reduced likelihood of collision.

A computer program product of operating a display system of a motor vehicle is provided. The computer program product comprises a non-transitory computer readable medium, a program code, and the program code being stored in the non-transitory computer readable medium that when executed a processor device causes the display system to perform the method described above.

A technical benefit may include updating captured visual media data by adjusting a field of view of a side view camera of a display system based on a lift axle position during a vehicle turning operation so that an end of the vehicle remains in the operator's view during the turning operation.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

The accompanying drawings, which are included to provide a further understanding of the disclosure and are incorporated in and constitute a part of this application, illustrate certain non-limiting examples. Like numbers in the figures refer to like operations and like components. In the drawings:
**Figure 1** is an exemplary schematic diagram illustrating components of a display system of a motor vehicle operated by a method according to some examples;
**Figure 2** is an exemplary schematic diagram illustrating components of a single-sectional motor vehicle operated by a method in which a field of view of a side view camera may be adjusted based on a lift axle position during a vehicle turning operation according to some examples;
**Figure 3** is an exemplary schematic diagram illustrating components of a single-sectional motor vehicle operated by a method in which a lift axle position may be in a lowered position according to some examples;
**Figure 4** is an exemplary schematic diagram illustrating components of a single-sectional motor vehicle operated by a method in which a lift axle position may be in a raised position according to some examples;
**Figure 5** is an exemplary schematic diagram illustrating components of a double-sectional motor vehicle operated by a method in which a field of view of a side view camera may be adjusted based on a lift axle position during a vehicle turning operation according to some examples;
**Figure 6** is an exemplary schematic diagram illustrating components of a double-sectional motor vehicle operated by a method in which a lift axle position may be in a lowered position according to some examples;
**Figure 7** is an exemplary schematic diagram illustrating components of a double-sectional motor vehicle operated by a method in which a lift axle position may be in a raised position according to some examples;
**Figure 8** is an exemplary schematic diagram illustrating components of a triple-sectional motor vehicle operated by a method in which a lift axle position may be in a lowered position according to some examples;
**Figure 9** is an exemplary schematic diagram illustrating components of a triple-sectional motor vehicle operated by a method in which a lift axle position may be in a raised position according to some examples;
**Figure 10** is an exemplary schematic diagram illustrating an adjustment of a data region of captured visual media data for a digital field of view of a side view camera of a display system of a motor vehicle according to some examples;
**Figure 11** is an exemplary schematic diagram illustrating an adjustment of a side view camera of a display system of a motor vehicle in a vertical direction, a lateral direction and/or a longitudinal direction for a physical field of view of the side view camera according to some examples;
**Figures 12A-12D** are exemplary schematic diagrams illustrating a location change of a rear turning point in response to that a change of a lift axle position according to some examples;
**Figure 13** is an exemplary schematic diagram illustrating components of a computer program product of operating a display system of a motor vehicle according to some examples; and
**Figure 14** is a schematic diagram of an exemplary computer system for implementing examples disclosed herein, according to one example.

### DETAILED DESCRIPTION

Aspects set forth below represent the necessary information to enable those skilled in the art to practice the disclosure.

As noted above, the field of view of a side view mirror is typically set by a driver and left in place regardless of driving conditions. For example, a truck may have a different overall length and/or a different turning radius depending on whether it is attached to a trailer. Moreover, even for the same trailer, the turning radius of a truck can change when a lift axle of the truck is lifted. If a side view mirror field of view is set for a turning radius that is based on a rear axle being lifted, the selected field of view may not be appropriate for the turning radius of the truck when the lift axle is lowered.

Right-hand turn collisions or left-hand turn collisions with motorists and pedestrians or other vehicles or objects might be avoided while a motor vehicle is turning by automatically tracking and keeping in view the end corner and/or the lateral side of the motor vehicle.

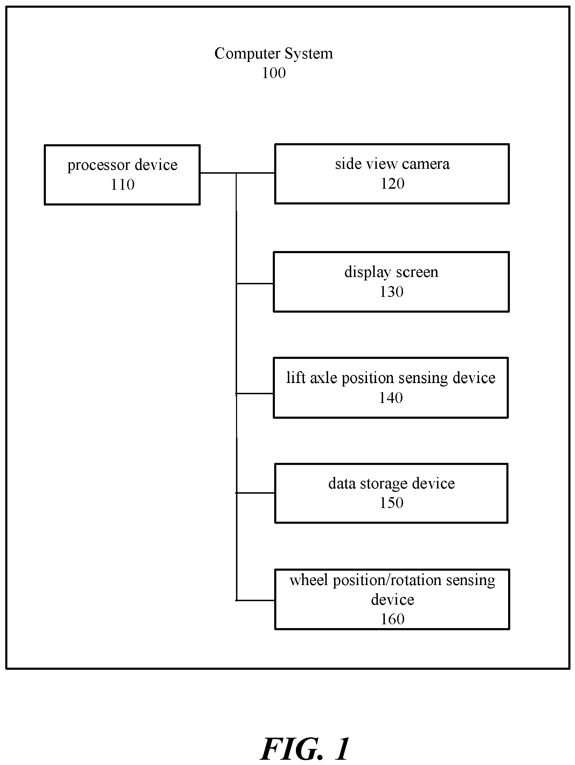

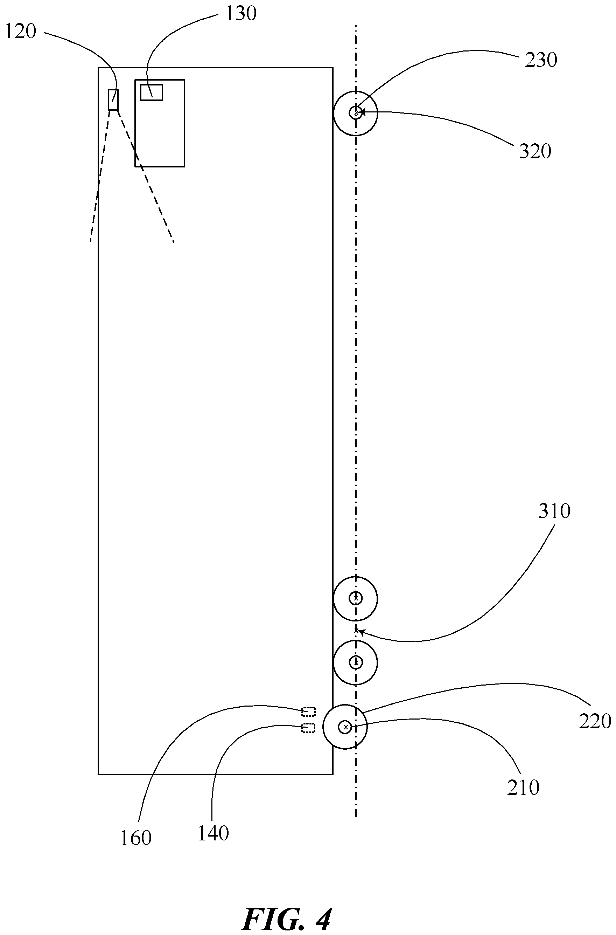

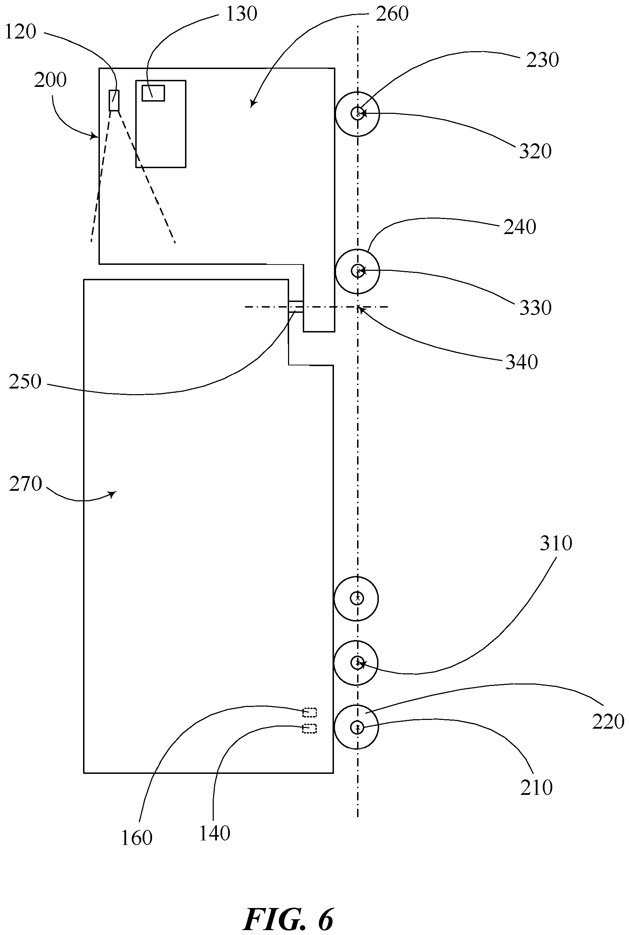

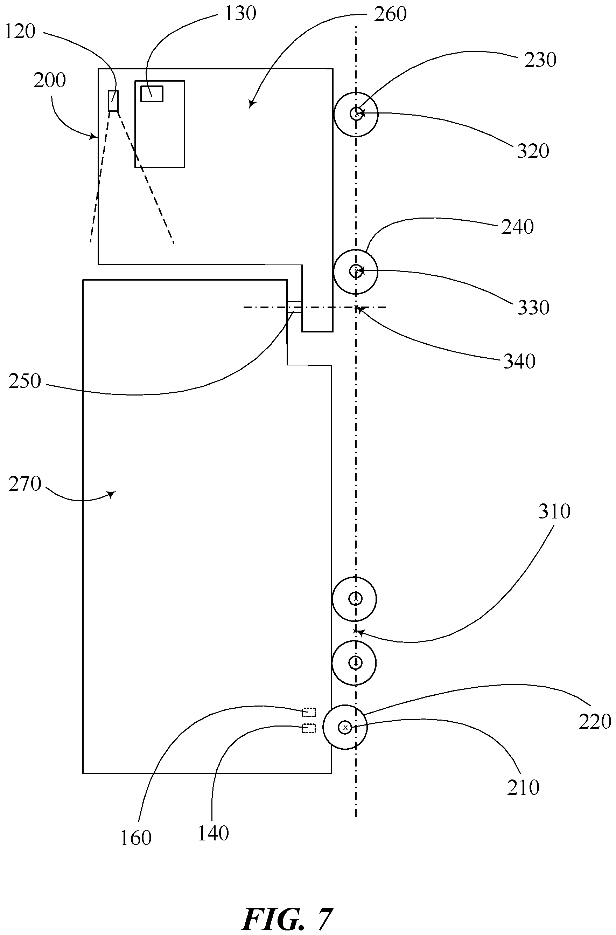

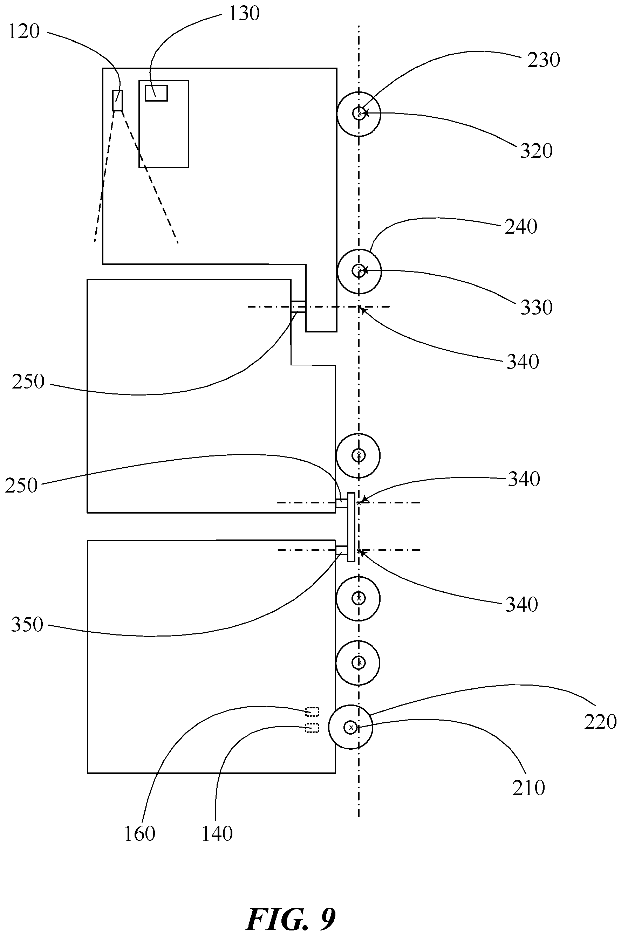

According to some examples, a method of operating a display system 100 of a motor vehicle 200 is provided. The method is described with reference to **Figures 1-12****.** According to some examples, as illustrated in **Figure 1****,** a display system 100 may include an electronic control unit (ECU) 110, a side view camera 120, a display screen 130, a lift axle position sensing device 140, a data storage device 150, a wheel position/rotation sensing device 160.

The side view camera 120, the display screen 130, the lift axle position sensing device 140, the data storage device 150, and the wheel position/rotation sensing device 160 may each be electrically coupled with the ECU 110. The lift axle position sensing device 140 and the wheel position/rotation sensing device 160 may each be a sensor or an image processor. The ECU 110, the display screen 130 and the data storage device 150 may be mounted inside, for instance, a cab of the motor vehicle 200. The side view camera 120 may be mounted outside, for instance, a cab of the motor vehicle 200, and may be located adjacent to a driver window or a passenger window. The display system 100 may be a Camera Monitor System (CMS) which may be used for an Advanced Driver Assistance Systems (ADAS) or self-driving systems.

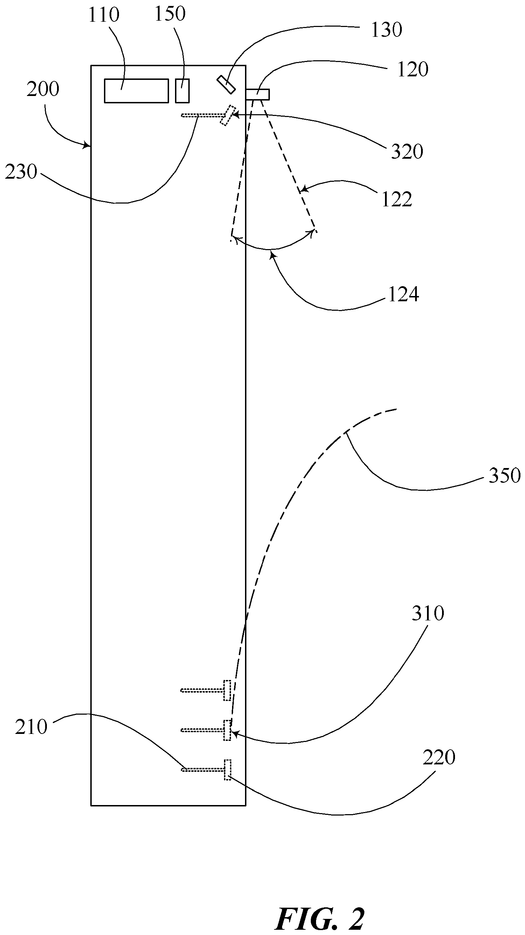

As shown in **Figures 2-9** **and** **12**, according to some examples, the motor vehicle 200, such as a commercial vehicle, may include at least one lift axle 210, a front axle 230, at least one fixed axle 202 and at least one wheel 220. The lift axle 210 may be used to manage more efficient tires wear out and load handling. For example, a trailer may have four axles, among which one axle may be raised relative to the other axles such that the tires are lifted from the ground while the remaining three axles may be in contact with ground. There may be some major advantages by using a lift axle for a trailer, such as extending the life of tires and brake shoes, reducing rolling resistance and improving fuel efficiency, and reducing damages to the road surface. The lift axle raising and lowering function may be achieved via compressed air used by a trailer or other similar device/mechanism.

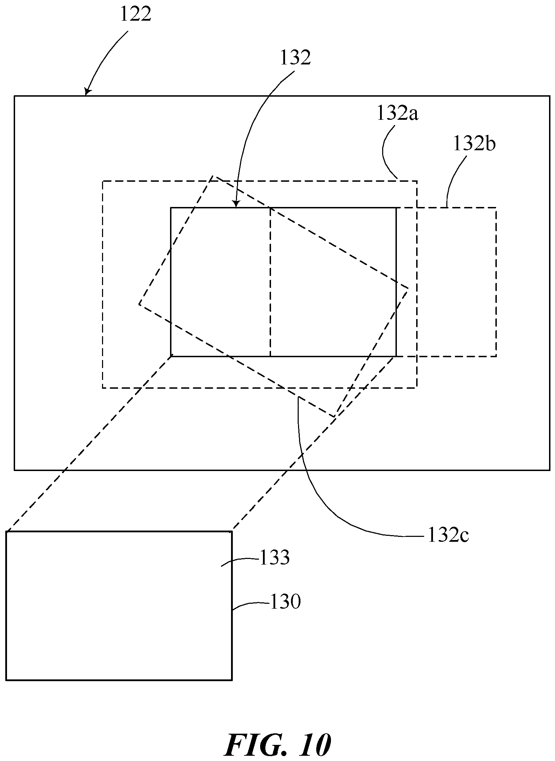

Brief reference is made to **Figure 10****,** which illustrates a field of view 122 of an image captured by a side view camera 120 (also referred to as the field of view 122 of the side view camera 120 or simply the camera field of view 122). The camera field of view 122 may be represented in the form of two-dimensional digital image data that is captured by the side view camera 120. A display image having a display field of view that corresponds to the camera field of view 122 may be displayed to an operator of the motor vehicle on a display screen 130. In some examples, only a portion of the camera field of view 122, represented by a two-dimensional data region 132 that corresponds to a sub-region of the field of view 122, may be displayed to the operator on the display screen 130.

Accordingly, the side view camera 120 has a camera field of view 122, and the display screen 130 has a display field of view 133 that may be the same as, or a portion of, the camera field of view 122. The term "camera field of view" refers to the extent of the observable world that is captured by the side view camera 120 at any given moment, i.e., the extent of the image captured by the camera. The image captured by the side view camera 120, or a portion of the image captured by the camera 120, may be displayed on the display screen 130. The display field of view refers to the extent of the camera field of view 122 that is displayed on the display screen 130. The display field of view 133 is therefore based on how much of the camera field of view is reconstructed into an image that is displayed on the display screen 130. The display field of view 133 can be less than or equal to the camera field of view 122, but cannot be more than the camera field of view 122.

A lift axle position of the at least one lift axle 210 may be determined by the ECU 110. When a vehicle turning operation, such as right turn or left turn, for the motor vehicle 200 is performed, a display field of view of an image displayed on the display screen 130 may be adjusted based on the lift axle position during the vehicle turning operation by the ECU 110 to provide updated visual media data. The updated visual media data may be displayed on the display screen 130, so as to display the visual media data in real-time.

Adjusting the display field of view 133 may be performed to maintain an end corner and/or a lateral side of the motor vehicle 200 fully within the display field of view 133 during the vehicle turning operation, such that the end corner and/or the lateral side of the motor vehicle 200 may be automatically tracked and kept in view while the motor vehicle 200 is turning. This may help to avoid right-hand turn collisions or left-hand turn collisions with motorists and pedestrians or other vehicles or objects. In other words, a better field of view, such as reduction of common blind spots, may be provided during the vehicle turning operation, so as to provide a better user experience and a more complete view of operating conditions.

Reference is made again to **Figure 10****,** which illustrates a camera field of view 122 and a data region 132 within the camera field of view 122 from which the display field of view 133 is generated. The display field of view 133 can be adjusted either digitally by changing the location of the data region 132 within the camera field of view 122 or physically by repositioning/reorienting the side view camera 120, such as by panning the side view camera 120 left or right, so that the entire field of view of the side view camera 120 is changed.

According to some examples, adjusting the digital field of view of the side view camera 120 to update the captured visual media data may include adjusting, via the ECU 110, a data region 132 of the image data captured by the camera 120 that corresponds to the display field of view 133.

For example, adjusting the data region 132 of the captured visual media data may include performing a digital transformation to the data region 132, such as digitally resizing 132a (e.g., enlarging or shrinking) the data region 132, panning 132b such as moving the data region 132 left, right, up or down, and/or rotating 132c, such as turning clockwise or counterclockwise. Thereby, displaying the updated visual media data may include displaying the adjusted data region of the captured visual media data when the field of view 122 of the side view camera 120 is the digital field of view.

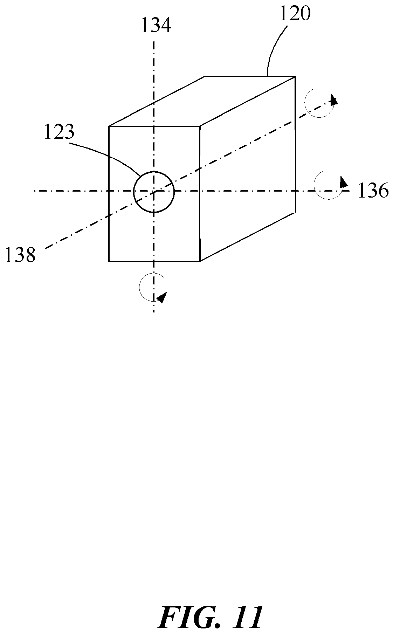

Alternatively, according to some examples, the display field of view 133 may be adjusted by adjusting the physical field of view 122 of the side view camera 120 to update the captured visual media data. This may be performed by applying, via the ECU 110, to the side view camera 120, at least one action of pivoting, translating and zooming the side view camera 120 to further capture another visual media data. In some examples, the camera field of view 122 of the side view camera 120 may be adjusted by rotating and/or translating the side view camera 120 around/along at least one of a vertical axis 134, a lateral axis 136 and a longitudinal axis 138, as shown in **Figure 11****.**

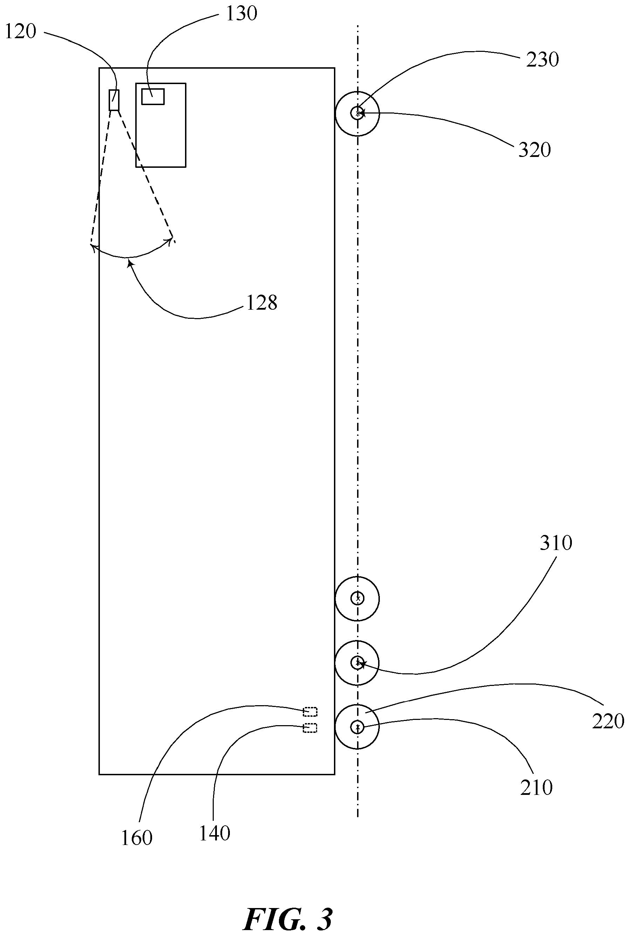

For example, a lens 123 of the side view camera 120, or the side view camera 120 itself, may rotate about a vertical axis in the vertical direction 134 or move up and down along the vertical direction 134, the lens 123 of the side view camera 120 or the side view camera 120 itself may rotate about a lateral axis in the lateral direction 136 or move left and right along the lateral direction 136, and/or the lens 123 of the side view camera 120, or the side view camera 120 itself, may rotate about a longitudinal axis in the longitudinal direction 138 or move forward and backward along the longitudinal direction 138. In a further specific example, adjusting the physical field of view of the side view camera 120 to update the captured visual media data may include adjusting at least one of an azimuth angle 124 as shown in **Figure 2** and an elevation angle 128 as shown in **Figure 3** of the side view camera 120 to further capture another visual media data for updating the captured visual media data.

According to some examples, in further detail, the method further may include determining a rear turning point 310 of the motor vehicle 200 based on the lift axle position by the ECU 110, as shown in **Figures 2-7** **and** **12**. Accordingly, adjusting the field of view 122 of the side view camera 120 based on the lift axle position may be performed by adjusting the field of view 122 of the side view camera 120 based on the rear turning point 310.

According to some examples, the rear turning point 310 may change in response to a change in the lift axle position. Additionally, the motor vehicle 200 may include the at least one fixed axle 202. The at least one fixed axle 202 may be adjacent the at least one lift axle 210. The rear turning point 310 may be determined further based on each fixed axle point 204 of the at least one fixed axle 202 by the ECU 110. Specifically, determining the lift axle position may include determining whether the lift axle position has changed to a raised position or to a lowered position. Accordingly, determining the rear turning point 310 based on the lift axle position and each fixed axle point 204 may be performed by designating a center point between each fixed axle point 204 of the at least one fixed axle 202 as the rear turning point 310 in response to determining that the lift axle position may be the raised position, and designating a center point between a lift axle point 206 of the at least one lift axle 210 and each fixed axle point 204 of the at least one fixed axle 202 as the rear turning point 310 in response to determining that the lift axle position may change to the lowered position.

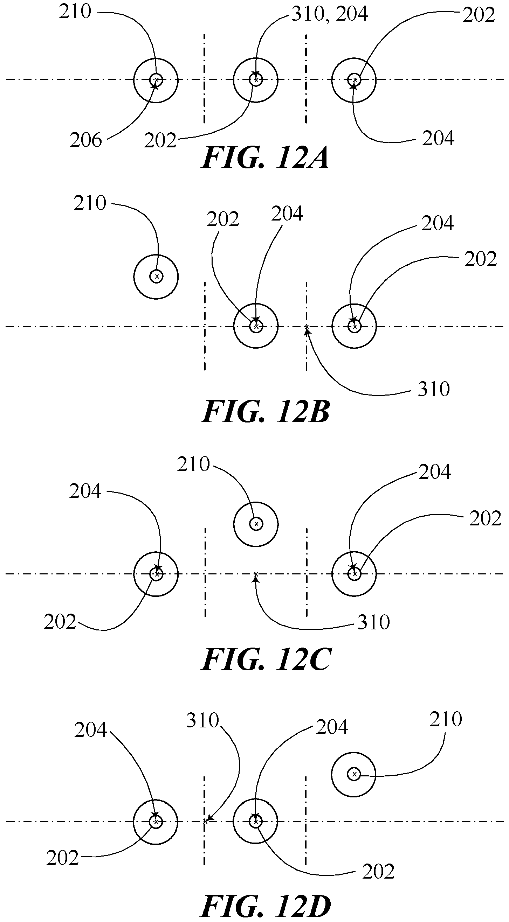

For example, referring now to **Figure 12****,** there may be three axles located adjacent to each other, of which one may be a lift axle 210 and two may be fixed axles 202. When the lift axle 210 and the two adjacent fixed axles 202 are all in a lowered position, the rear turning point 310 may be related to the fixed axle 202 in the middle, as shown in **Figure 12A****.** If the lift axle 210 is the leftmost one or the rightmost one among these three axles and when the lift axle 210 may change to a raised position, the rear turning point 310 may change from a middle location to another location between the two fixed axles 202, as shown in **Figures 12B and 12D****.** On the other hand, as shown in **Figure 12C****,** if the lift axle 210 is between the two adjacent fixed axles 202 and when the lift axle 210 changes to a raised position, the rear turning point 310 may remain unchanged in the middle location.

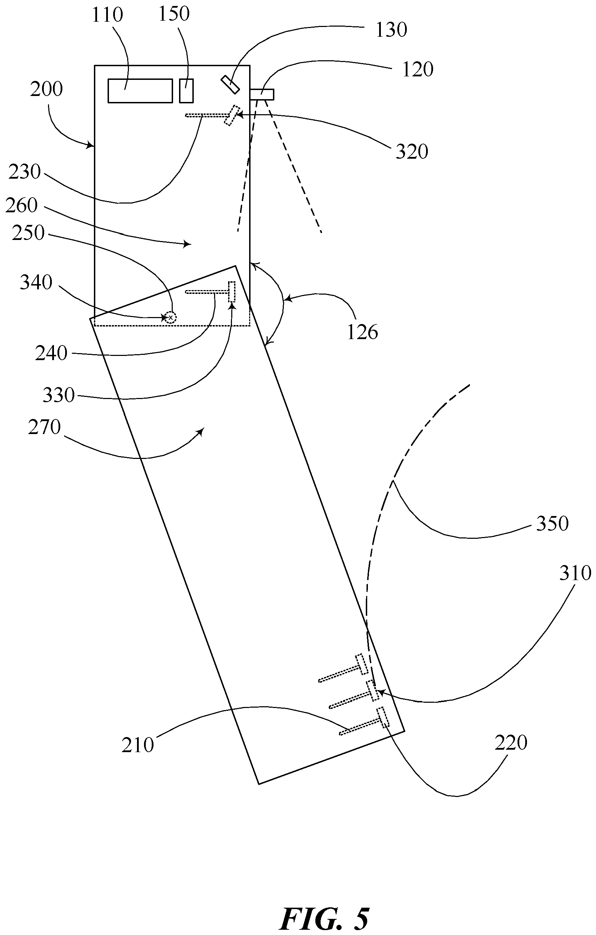

According to some examples, the method further may include calculating a turning radius 350 of the motor vehicle 200 based on the rear turning point 310 by the ECU 110, as shown in **Figures 2** **and** **5****.** Accordingly, adjusting the field of view 122 of the side view camera 120 based on the rear turning point 310 may be performed by adjusting the field of view 122 of the side view camera 120 based on the turning radius 350. According to some examples, the turning radius 350 may change in response to that the rear turning point 310 may change. In other words, the turning radius 350 may change depending on the lift axle position. For example, when the lift axle position causes the motor vehicle to have a larger turning radius, the field of view 122 of the side view camera 120 and/or the field of view 132 of the display screen 130 may be adjusted by digitally or mechanically panning the field of view outwards to maintain an end of the vehicle within the field of view 132 of the display screen 130 during the turning operation. Conversely, when the lift axle position causes the motor vehicle to have a smaller turning radius, the field of view 122 of the side view camera 120 and/or the field of view 132 of the display screen 130 may be adjusted by digitally or mechanically panning the field of view inwards to maintain an end of the vehicle within the field of view 132 of the display screen 130 during the turning operation.

Referring now to **Figures 2** **and** **5****,** the motor vehicle 200 may include the front axle 230, and the method further may include calculating a distance between a front axle point 320 of the front axle 230 and the rear turning point 310 by the ECU 110. Specifically, calculating the turning radius 350 based on the rear turning point 310 may be performed by calculating the turning radius 350 based on the distance, so as to improve the adjustment of the field of view 122 of the side view camera 120.

Referring now to **Figures 5-7****,** in an example, the motor vehicle 200 may include an intermediate axle 240 and a hitch 250. The intermediate axle 240 may be located between the front axle 230 and the at least one lift axle 210. The hitch 250 may be located between the front axle 230 and the at least one lift axle 210, and the hitch 250 may be located adjacent to the intermediate axle 240. Therefore, a front distance and a rear distance may be combined as the distance by the ECU 110, in which the front distance between an intermediate axle point 330 of the intermediate axle 240 and the front axle point 320 may be calculated by the ECU 110 while the rear distance between a hitching point 340 of the hitch 250 and the rear turning point 310 may be calculated by the ECU 110.

Furthermore, the motor vehicle 200 may include a towing vehicular part 260 and a towed vehicular part 270, the towed vehicular part 270 may be attached to the towing vehicular part 260 via the hitch 250, the front axle 230 may be mounted on the towing vehicular part 260, the intermediate axle 240 may be mounted on the towing vehicular part 260. The at least one lift axle 210 may be mounted on the towed vehicular part 270. Moreover, the method further may include calculating a relative angle 126 between the towing vehicular part 260 and the towed vehicular part 270, as shown in **Figure 5****.** Calculating the turning radius 350 based on the rear turning point 310 may be performed by calculating the turning radius 350 based on the distance and the relative angle 126, so as to improve the adjustment of the field of view 122 of the side view camera 120.

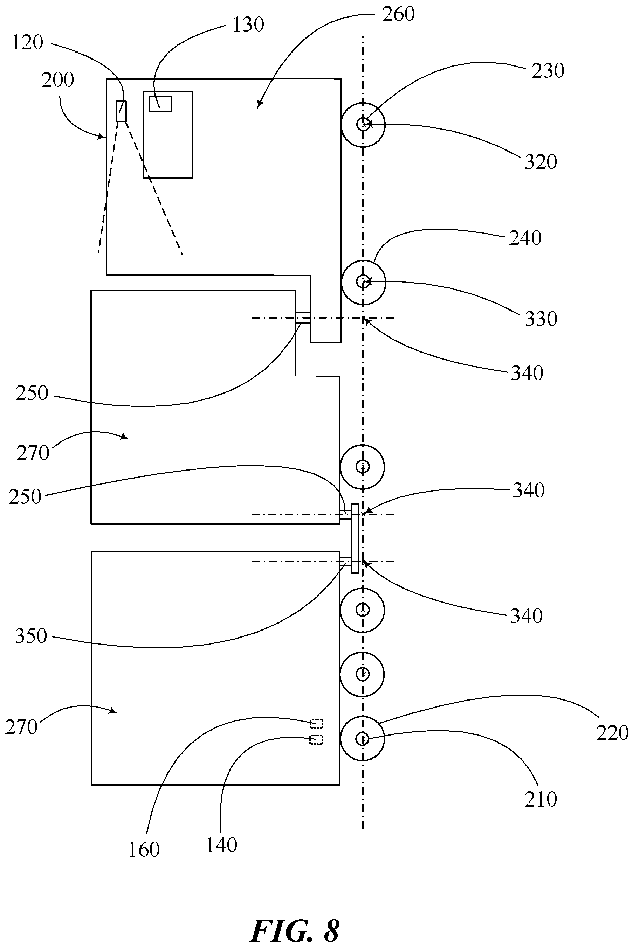

Referring now to **Figures 8-9****,** in another example, the motor vehicle 200 may include an intermediate axle 240 and a plurality of hitches 250. The intermediate axle 240 may be located between the front axle 230 and the at least one lift axle 210. The plurality of hitches 250 may be located between the front axle 230 and the at least one lift axle 210, and the rear hitch 250 may be located adjacent to the at least one lift axle 210. A front distance, at least one intermediate distance, and a rear distance may be combined as the distance by the ECU 110. The front distance between an intermediate axle point 330 of the intermediate axle 240 and the front axle point 320 may be calculated by the ECU 110. Each intermediate distance between two adjacent hitching points 340 among a plurality of hitching points 340 of two adjacent hitches 250 among the plurality of hitches 250 for the plurality of hitching points 340 may be calculated by the ECU 110. The rear distance between a rear hitching point 340 among the plurality of hitching points 340 of a rear hitch 250 among the plurality of hitches 250 and the rear turning point 310 may be calculated by the ECU 110.

The motor vehicle 200 may include a towing vehicular part 260 and a plurality of towed vehicular parts 270. A front hitch 250 among the plurality of hitches 250 may be located adjacent to the intermediate axle 240. A front towed vehicular part 270 among the plurality of towed vehicular parts 270 may be attached to the towing vehicular part 260 via the front hitch 250. Two adjacent towed vehicular part 270 among the plurality of towed vehicular parts 270 may be attached to each other via each corresponding hitches 250 among the plurality of hitches 250.

The front axle 230 may be mounted on the towing vehicular part 260, the intermediate axle 240 may be mounted on the towing vehicular part 260, and the at least one lift axle 210 may be mounted on a rear towed vehicular part 270 among the plurality of towed vehicular parts 270. Moreover, the method further may include calculating each relative angle 126 between the towing vehicular part 260 and the front towed vehicular part 270 among the plurality of towed vehicular parts 270 and between two adjacent towed vehicular part 270 among the plurality of towed vehicular parts 270. Calculating the turning radius 350 based on the rear turning point 310 may be performed by calculating the turning radius 350 based on the distance and the plurality of relative angles 126.

As previously mentioned, determining the lift axle position may include determining whether the lift axle position has or will change to a raised position or to a lowered position. According to some examples, the display system 100 may include the lift axle position sensing device 140 and the data storage device 150 each electrically coupled with the ECU 110, as shown in **Figure 1****.** The lift axle position sensing device 140 may be located adjacent to the at least one lift axle 210. Thus, determining whether the lift axle position changes to the raised position or to the lowered position may be performed by acquiring lift axle position data of the at least one lift axle 210 by the lift axle position sensing device 140.

In some examples, determining whether the lift axle position changes comprises retrieving preset raised position data associated with the raised position and preset lowered position data associated with the lowered position from the data storage device 150, and comparing the lift axle position data with the preset raised position data and the preset lowered position data. The lift axle position is determined to have changed to the raised position when the lift axle position data matches with the preset raised position data, and the lift axle position is determined to have changed to the lowered position when the lift axle position data may match with the preset lowered position data.

According to some examples, the motor vehicle 200 may include the at least one wheel 220 connected with the at least one lift axle 210, as shown in **Figures 2-9** **and** **12**. Thus, determining whether the lift axle position changes to the raised position or to the lowered position may be performed by determining whether a wheel position of the at least one wheel 220 changes to an up position or to a down position by the ECU 110.

In some examples, the lift axle position may be determined to change to the raised position in response to determining that the wheel position has changed to the up position. The lift axle position may be determined to have changed to the lowered position in response to determining that the wheel position has changed to the down position.

The display system 100 may include the wheel position/rotation sensing device 160 electrically coupled with the ECU 110, as shown in **Figure 1****.** The wheel position/rotation sensing device 160 may be located adjacent to the at least one wheel 220. Thus, determining whether the wheel position has change to the up position or to the down position may be performed by acquiring wheel position data of the at least one wheel 220 by the wheel position/rotation sensing device 160, retrieving preset up position data associated with the up position and preset down position data associated with the down position from the data storage device 150, and comparing the wheel position data with the preset up position data and the preset down position data by the ECU 110. The wheel position is determined to have changed to the up position in response to determining that the wheel position data matches the preset up position data. The wheel position is determined to have changed to the down position in response to determining that the wheel position data matches the preset down position data.

Alternatively, determining whether the wheel position has changed to the up position or to the down position may be performed by performing a vehicle moving operation for the motor vehicle 200, acquiring a wheel rotation parameter of the at least one wheel 220 during the vehicle moving operation by the wheel position/rotation sensing device 160, retrieving a preset rotation threshold from the data storage device 150, and comparing the wheel rotation parameter with the preset rotation threshold by the ECU 110. The wheel position is determined to change to the up position in response to determining that the wheel rotation parameter is smaller than the preset rotation threshold. The wheel position is determined to change to the down position in response to determining that the wheel rotation parameter is larger than the preset rotation threshold.

According to some examples, determining whether the lift axle position has change to the raised position or to the lowered position may be performed, without determining the wheel position first, by performing a vehicle moving operation for the motor vehicle 200, acquiring a wheel rotation parameter of the at least one wheel 220 during the vehicle moving operation by the wheel position/rotation sensing device 160, retrieving a preset rotation threshold from the data storage device 150, and comparing the wheel rotation parameter with the preset rotation threshold by the ECU 110. The wheel position is determined to change to the raised position in response to determining that the wheel rotation parameter is smaller than the preset rotation threshold, and the wheel position is determined to change to the lowered position in response to determining that the wheel rotation parameter is larger than the preset rotation threshold.

According to some examples, the visual media data may include a video data. In some examples, the visual media data may include at least one image data, and the video data may be formed by a plurality of image data captured along a timeline. For example, the data region 132 of the captured visual media data in real-time may be formed by a combination of a data region of a plurality of image data along a timeline.

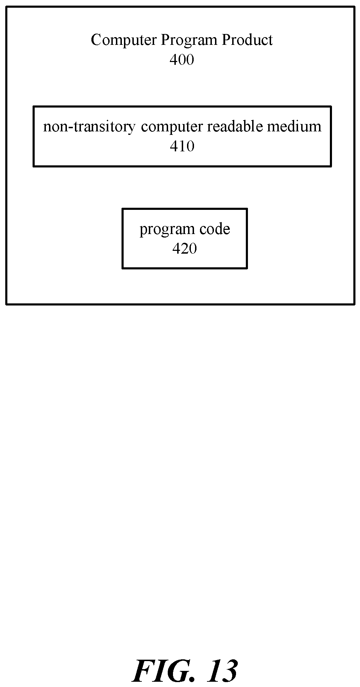

According to some examples, a computer program product 400 of operating a display system 100 of a motor vehicle 200 may also be provided. As shown in **Figure 13****,** the computer program product 400 may include a non-transitory computer readable medium 410 and a program code 420. The program code 420 may be stored in the non-transitory computer readable medium 410 that when executed by the display system 100 as recited above may cause the display system 100 to perform the method as recited above.

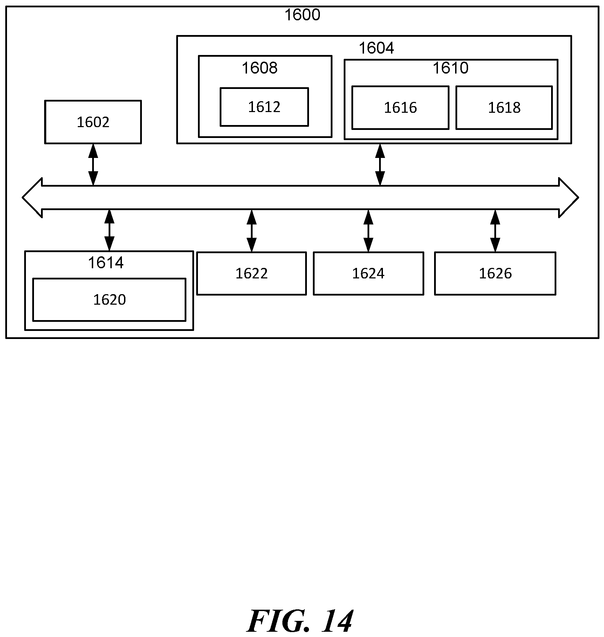

**Figure 14** is a schematic diagram of a computer system 1600 for implementing examples disclosed herein. The computer system 1600 is adapted to execute instructions from a computer-readable medium to perform these and/or any of the functions or processing described herein. The computer system 1600 may be connected (e.g., networked) to other machines in a LAN, an intranet, an extranet, or the Internet. While only a single device is illustrated, the computer system 1600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1600 may comprise at least one computing device or electronic device capable of including firmware, hardware, and/or executing software instructions to implement the functionality described herein. The computer system 1600 may include a processor device 1602 (may also be referred to as a control unit), a memory 1604, and a system bus 1606. The computer system 1600 may include at least one computing device having the processor device 1602. The system bus 1606 provides an interface for system components including, but not limited to, the memory 1604 and the processor device 1602. The processor device 1602 may include any number of hardware components for conducting data or signal processing or for executing computer code stored in memory 1604. The processor device 1602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 1606 may be any of several types of bus structures that may further interconnect to a memory bus (with or without a memory controller), a peripheral bus, and/or a local bus using any of a variety of bus architectures. The memory 1604 may be one or more devices for storing data and/or computer code for completing or facilitating methods described herein. The memory 1604 may include database components, object code components, script components, or other types of information structure for supporting the various activities herein. Any distributed or local memory device may be utilized with the systems and methods of this description. The memory 1604 may be communicably connected to the processor device 1602 (e.g., via a circuit or any other wired, wireless, or network connection) and may include computer code for executing one or more processes described herein. The memory 1604 may include non-volatile memory 1608 (e.g., read-only memory (ROM), erasable programmable read-only memory (EPROM), electrically erasable programmable read-only memory (EEPROM), etc.), and volatile memory 1610 (e.g., random-access memory (RAM)), or any other medium which can be used to carry or store desired program code in the form of machine-executable instructions or data structures and which can be accessed by a computer or other machine with a processor device 1602. A basic input/output system (BIOS) 1612 may be stored in the non-volatile memory 1608 and can include the basic routines that help to transfer information between elements within the computer system 1600.

The computer system 1600 may further include or be coupled to a non-transitory computer-readable storage medium such as the storage device 1614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 1614 and/or in the volatile memory 1610, which may include an operating system 1616 and/or one or more program modules 1618. All or a portion of the examples disclosed herein may be implemented as a computer program product 1620 stored on a transitory or non-transitory computer-usable or computer-readable storage medium (e.g., single medium or multiple media), such as the storage device 1614, which includes complex programming instructions (e.g., complex computer-readable program code) to cause the processor device 1602 to carry out the steps described herein. Thus, the computer-readable program code can comprise software instructions for implementing the functionality of the examples described herein when executed by the processor device 1602. The processor device 1602 may serve as a controller or control system for the computer system 1600 that is to implement the functionality described herein.

The computer system 1600 also may include an input device interface 1622 (e.g., input device interface and/or output device interface). The input device interface 1622 may be configured to receive input and selections to be communicated to the computer system 1600 when executing instructions, such as from a keyboard, mouse, touch-sensitive surface, etc. Such input devices may be connected to the processor device 1602 through the input device interface 1622 coupled to the system bus 1606 but can be connected through other interfaces such as a parallel port, an Institute of Electrical and Electronic Engineers (IEEE) 1394 serial port, a Universal Serial Bus (USB) port, an IR interface, and the like. The computer system 1600 may include an output device interface 1624 configured to forward output, such as to a display, a video display unit (e.g., a liquid crystal display (LCD) or a cathode ray tube (CRT)). The computer system 1600 may also include a communications interface 1626 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

## Claims

1. A method of operating a computer system (100) of a motor vehicle (200), the method comprising:
receiving, via a processor device (110) of the computer system, camera image data captured by a side view camera (120) of the motor vehicle, the camera image data comprising a camera field of view;
displaying display image data on a display screen, the display image data comprising a display field of view of at least a portion of the camera field of view of the camera image data; and
adjusting the display field of view during a turning operation of the motor vehicle based on a lift axle position of at least one lift axle (210) of the motor vehicle.

2. The method of Claim 1, wherein adjusting the display field of view maintains an end corner of the motor vehicle within the display field of view during the turning operation.

3. The method of any previous Claim, wherein adjusting the display field of view comprises at least one of digitally resizing (132a), digitally panning (132b), and digitally rotating (132c) the display field of view within the camera field of view.

4. The method of Claim 1, wherein adjusting the display field of view comprises mechanically adjusting the side view camera based on the lift axle position of the at least one lift axle.

5. The method of Claim 4, wherein mechanically adjusting the side view camera comprises panning the side view camera.

6. The method of any previous Claim, wherein adjusting the display field of view based on the lift axle position is performed by adjusting, via the processor device, the display field of view based on a rear turning point (310) of the motor vehicle.

7. The method of Claim 6, wherein a center point between fixed axle points (204) of at least two fixed axles (202) of the motor vehicle is designated as the rear turning point in response to the lift axle position being in a raised position.

8. The method of any of Claims 1-5, wherein adjusting the display field of view based on the lift axle position is performed by adjusting, via the processor device, the display field of view based on a turning radius (350) of the motor vehicle.

9. The method of any of Claims 1-5, wherein adjusting the display field of view based on the lift axle position is performed by adjusting, via the processor device, the display field of view based on a distance between a front axle point (320) of a front axle (230) of the motor vehicle and a rear turning point (310) of the motor vehicle.

10. The method of Claim 9, wherein the distance is combined from a front distance between an intermediate axle point (330) of an intermediate axle (240) of the motor vehicle and the front axle point and a rear distance between a hitching point (340) of a hitch (250) of the motor vehicle and the rear turning point.

11. The method of Claim 10, wherein the front axle and the intermediate axle are mounted on a towing vehicular part (260) of the motor vehicle, and wherein the at least one lift axle is mounted on a towed vehicular part (270) of the motor vehicle.

12. The method of Claim 11, wherein adjusting the display field of view based on the lift axle position is performed by adjusting, via the processor device, the display field of view based on the distance and a relative angle (126) between the towing vehicular part and the towed vehicular part.

13. The method of any previous Claim, further comprising sensing the lift axle position by a lift axle position sensing device (140) of the computer system.

14. The method of any of Claims 1-12, wherein the lift axle position is determined by a wheel position of at least one wheel (220) of the motor vehicle sensed by a wheel position sensing device (160) of the computer system, and wherein the at least one wheel is connected with the at least one lift axle.

15. The method of any of Claims 1-12, wherein the lift axle position is determined by a wheel rotation status of at least one wheel sensed by a wheel rotation sensing device (160) of the computer system, and wherein the at least one wheel is connected with the at least one lift axle.

16. A method of operating a computer system (100) of a motor vehicle (200), the method comprising:
determining, via a processor device (110), a lift axle position of at least one lift axle (210) of the motor vehicle;
adjusting, via the processor device, an image captured by a side view camera (120) of the vehicle during a turning operation of the motor vehicle based on the lift axle position of at least one lift axle of the motor vehicle; and
displaying the adjusted image on a display screen of the vehicle.

17. The method of Claim 16, wherein adjusting the image comprises adjusting, via the processor device, at least one of an azimuth angle (124) and an altitude angle (128) of the side view camera.

18. The method of Claim 16, wherein adjusting the image comprises applying, via the processor device, at least one of digitally resizing (132a), digitally panning (132b) and digitally rotating (132c) at least a portion of the image captured by the side view camera.

19. The method of Claim 16, wherein adjusting the image comprises mechanically panning the side view camera.

20. The method of any of Claims 16 to 18, wherein adjusting the image is performed to maintain an end corner of the motor vehicle falling within a field of view of a data region of the image that is displayed on the display screen during the turning operation.

21. A computer program product (400) of operating a display system of a motor vehicle (200), the computer program product comprising:
a non-transitory computer readable medium (410);
a program code (420); and
the program code being stored in the non-transitory computer readable medium that when executed a processor device causes the display system to perform the method of any of Claims 1-19.

## Patentansprüche

1. Verfahren zum Betreiben eines Computersystems (100) eines Kraftfahrzeugs (200), das Verfahren umfassend:
Empfangen von Kamerabilddaten, die von einer Seitenansichtskamera (120) des Kraftfahrzeugs aufgenommen wurden, über eine Prozessorvorrichtung (110) des Computersystems, die Kamerabilddaten umfassend ein Kamerasichtfeld;
Anzeigen von Anzeigebilddaten auf einem Anzeigebildschirm, die Anzeigebilddaten umfassend ein Anzeigesichtfeld von mindestens einem Abschnitt des Kamerasichtfelds der Kamerabilddaten; und
Anpassen des Anzeigesichtfeldes während eines Wendevorgangs des Kraftfahrzeugs basierend auf einer Hubachsposition von mindestens einer Hubachse (210) des Kraftfahrzeugs.

2. Verfahren nach Anspruch 1, wobei durch das Anpassen des Anzeigesichtfelds eine Ecke des Kraftfahrzeugs während des Wendevorgangs innerhalb des Anzeigesichtfelds gehalten wird.

3. Verfahren nach einem vorstehenden Anspruch, wobei das Anpassen des Anzeigesichtfelds mindestens ein digitales Ändern der Größe (132a), digitales Schwenken (132b) und/oder digitales Drehen (132c) des Anzeigesichtfelds innerhalb des Kamerasichtfelds umfasst.

4. Verfahren nach Anspruch 1, wobei das Anpassen des Anzeigesichtfelds das mechanische Anpassen der Seitenansichtskamera basierend auf der Hubachsposition der mindestens einen Hubachse umfasst.

5. Verfahren nach Anspruch 4, wobei das mechanische Anpassen der Seitenansichtskamera das Schwenken der Seitenansichtskamera umfasst.

6. Verfahren nach einem vorstehenden Anspruch, wobei das Anpassen des Anzeigesichtfelds basierend auf der Hubachsposition durchgeführt wird, indem das Anzeigesichtfeld basierend auf einem hinteren Wendepunkt (310) des Kraftfahrzeugs über die Prozessorvorrichtung angepasst wird.

7. Verfahren nach Anspruch 6, wobei ein Mittelpunkt zwischen festen Achspunkten (204) von mindestens zwei festen Achsen (202) des Kraftfahrzeugs als hinterer Wendepunkt vorgesehen ist, wenn die Hubachse in einer angehobenen Position positioniert ist.

8. Verfahren nach einem der Ansprüche 1 bis 5, wobei das Anpassen des Anzeigesichtfeldes basierend auf der Hubachsposition durchgeführt wird, indem das Anzeigesichtfeld basierend auf einem Wenderadius (350) des Kraftfahrzeugs über die Prozessorvorrichtung angepasst wird.

9. Verfahren nach einem der Ansprüche 1 bis 5, wobei das Anpassen des Anzeigesichtfeldes basierend auf der Hubachsposition durchgeführt wird, indem das Anzeigesichtfeld basierend auf einem Abstand zwischen einem vorderen Achspunkt (320) einer Vorderachse (230) des Kraftfahrzeugs und einem hinteren Wendepunkt (310) des Kraftfahrzeugs über die Prozessorvorrichtung angepasst wird.

10. Verfahren nach Anspruch 9, wobei der Abstand aus einem vorderen Abstand zwischen einem Zwischenachspunkt (330) einer Zwischenachse (240) des Kraftfahrzeugs und dem vorderen Achspunkt und einem hinteren Abstand zwischen einem Kupplungspunkt (340) einer Kupplung (250) des Kraftfahrzeugs und dem hinteren Wendepunkt kombiniert wird.

11. Verfahren nach Anspruch 10, wobei die Vorderachse und die Zwischenachse an einem Zugfahrzeugteil (260) des Kraftfahrzeugs befestigt sind und wobei die wenigstens eine Hubachse an einem gezogenen Fahrzeugteil (270) des Kraftfahrzeugs befestigt ist.

12. Verfahren nach Anspruch 11, wobei das Anpassen des Anzeigesichtfelds basierend auf der Hubachsposition durchgeführt wird, indem das Anzeigesichtfeld basierend auf dem Abstand und einem relativen Winkel (126) zwischen dem Zugfahrzeugteil und dem gezogenen Fahrzeugteil über die Prozessorvorrichtung angepasst wird.

13. Verfahren nach einem vorstehenden Anspruch, ferner umfassend das Erfassen der Hubachsposition durch eine Positionserfassungsvorrichtung (140) des Computersystems.

14. Verfahren nach einem der Ansprüche 1 bis 12, wobei die Hubachsposition durch eine Radposition von mindestens einem Rad (220) des Kraftfahrzeugs bestimmt wird, die durch eine Radpositionserfassungsvorrichtung (160) des Computersystems erfasst wird, und wobei das mindestens eine Rad mit der mindestens einen Hubachse verbunden ist.

15. Verfahren nach einem der Ansprüche 1 bis 12, wobei die Hubachsposition durch einen Raddrehstatus von mindestens einem Rad bestimmt wird, der durch eine Raddrehungserfassungsvorrichtung (160) des Computersystems erfasst wird, und wobei das mindestens eine Rad mit der mindestens einen Hubachse verbunden ist.

16. Verfahren zum Betreiben eines Computersystems (100) eines Kraftfahrzeugs (200), das Verfahren umfassend:
Bestimmen einer Hubachsposition von mindestens einer Hubachse (210) des Kraftfahrzeugs über eine Prozessorvorrichtung (110);
Anpassen eines Bildes, das von einer Seitenansichtkamera (120) des Fahrzeugs während eines Wendevorgangs des Kraftfahrzeugs aufgenommen wurde, über die Prozessorvorrichtung, basierend auf der Hubachsposition von mindestens einer Hubachse des Kraftfahrzeugs; und
Anzeigen des angepassten Bildes auf einem Anzeigebildschirm des Fahrzeugs.

17. Verfahren nach Anspruch 16, wobei das Anpassen des Bildes das Anpassen von mindestens einem Azimutwinkel (124) und/oder einem Höhenwinkel (128) der Seitenansichtskamera über die Prozessorvorrichtung umfasst.

18. Verfahren nach Anspruch 16, wobei das Anpassen des Bildes das Anwenden von mindestens digitalem Ändern der Größe (132a), digitalem Schwenken (132b) und/oder digitalem Drehen (132c) mindestens eines Abschnitts des von der Seitenansichtskamera aufgenommenen Bildes über die Prozessorvorrichtung umfasst.

19. Verfahren nach Anspruch 16, wobei das Anpassen des Bildes das mechanische Schwenken der Seitenansichtskamera umfasst.

20. Verfahren nach einem der Ansprüche 16 bis 18, wobei das Anpassen des Bildes durchgeführt wird, um eine Endecke des Kraftfahrzeugs innerhalb eines Sichtfeldes einer Datenregion des Bildes zu halten, das während des Wendevorgangs auf dem Anzeigebildschirm angezeigt wird.

21. Computerprogrammprodukt (400) zum Betreiben eines Anzeigesystems eines Kraftfahrzeugs (200), das Computerprogrammprodukt umfassend:
ein nichtflüchtiges, computerlesbares Medium (410);
einen Programmcode (420); und
wobei der Programmcode auf einem nichtflüchtigen, computerlesbaren Medium gespeichert ist, das bei Ausführung durch eine Prozessorvorrichtung das Anzeigesystem veranlasst, das Verfahren nach einem der Ansprüche 1 bis 19 durchzuführen.

## Revendications

1. Procédé d'exploitation d'un système informatique (100) d'un véhicule automobile (200), le procédé comprenant :
la réception, par l'intermédiaire d'un dispositif processeur (110) du système informatique, de données d'image de caméra capturées par une caméra de vue latérale (120) du véhicule automobile, les données d'image de caméra comprenant un champ de vision de caméra ;
l'affichage de données d'image sur un écran d'affichage, les données d'image affichées comprenant un champ de vision d'affichage d'au moins une partie du champ de vision de caméra des données d'image de caméra ; et
le réglage du champ de vision d'affichage pendant une opération de virage du véhicule automobile en fonction d'une position d'essieu relevable d'au moins un essieu relevable (210) du véhicule automobile.

2. Procédé selon la revendication 1, dans lequel le réglage du champ de vision d'affichage maintient un coin extrême du véhicule automobile à l'intérieur du champ de vision d'affichage pendant l'opération de virage.

3. Procédé selon l'une quelconque revendication précédente, dans lequel le réglage du champ de vision d'affichage comprend au moins l'un parmi redimensionnement numérique (132a), panoramique numérique (132b) et rotation numérique (132c) du champ de vision d'affichage à l'intérieur du champ de vision de caméra.

4. Procédé selon la revendication 1, dans lequel le réglage du champ de vision comprend le réglage mécanique de la caméra de vue latérale en fonction de la position d'essieu relevable de l'au moins un essieu relevable.

5. Procédé selon la revendication 4, dans lequel le réglage mécanique de la caméra de vue latérale comprend un panoramique de la caméra de vue latérale.

6. Procédé selon l'une quelconque revendication précédente, dans lequel le réglage du champ de vision d'affichage en fonction de la position d'essieu relevable est effectué en réglant, par l'intermédiaire du dispositif processeur, le champ de vision d'affichage en fonction d'un point de braquage arrière (310) du véhicule automobile.

7. Procédé selon la revendication 6, dans lequel un point central entre des points d'essieu fixes (204) d'au moins deux essieux fixes (202) du véhicule automobile est désigné comme point de braquage arrière en réponse à la position d'essieu relevable étant dans une position relevée.

8. Procédé selon l'une quelconque des revendications 1 à 5, dans lequel le réglage du champ de vision d'affichage en fonction de la position d'essieu relevable est effectué en réglant, par l'intermédiaire du dispositif processeur, le champ de vision d'affichage en fonction d'un rayon de braquage (350) du véhicule automobile.

9. Procédé selon l'une quelconque des revendications 1 à 5, dans lequel le réglage du champ de vision d'affichage en fonction de la position d'essieu relevable est effectué en réglant, par l'intermédiaire du dispositif processeur, le champ de vision d'affichage en fonction d'une distance entre un point d'essieu avant (320) d'un essieu avant (230) du véhicule automobile et un point de braquage arrière (310) du véhicule automobile.

10. Procédé selon la revendication 9, dans lequel la distance est combinée à partir d'une distance avant entre un point d'essieu intermédiaire (330) d'un essieu intermédiaire (240) du véhicule automobile et le point d'essieu avant et une distance arrière entre un point d'attelage (340) d'un attelage (250) du véhicule automobile et le point de braquage arrière.

11. Procédé selon la revendication 10, dans lequel l'essieu avant et l'essieu intermédiaire sont montés sur une partie de véhicule de remorquage (260) du véhicule automobile, et dans lequel l'au moins un essieu relevable est monté sur une partie de véhicule remorqué (270) du véhicule automobile.

12. Procédé selon la revendication 11, dans lequel le réglage du champ de vision d'affichage en fonction de la position d'essieu relevable est effectué en réglant, par l'intermédiaire du dispositif processeur, le champ de vision d'affichage en fonction de la distance et d'un angle relatif (126) entre la partie de véhicule de remorquage et la partie de véhicule remorqué.

13. Procédé selon l'une quelconque revendication précédente, comprenant en outre la détection de la position d'essieu relevable par un dispositif de détection de position d'essieu relevable (140) du système informatique.

14. Procédé selon l'une quelconque des revendications 1 à 12, dans lequel la position d'essieu relevable est déterminée par une position d'au moins une roue (220) du véhicule automobile détectée par un dispositif de détection de position de roue (160) du système informatique, et dans lequel l'au moins une roue est reliée à l'au moins un essieu relevable.

15. Procédé selon l'une quelconque des revendications 1 à 12, dans lequel la position d'essieu relevable est déterminée par un état de rotation de roue d'au moins une roue détectée par un dispositif de détection de rotation de roue (160) du système informatique, et dans lequel l'au moins une roue est reliée à l'au moins un essieu relevable.

16. Procédé d'exploitation d'un système informatique (100) d'un véhicule automobile (200), le procédé comprenant :
la détermination, par l'intermédiaire d'un dispositif processeur (110), d'une position d'essieu relevable d'au moins un essieu relevable (210) du véhicule automobile ;
le réglage, par l'intermédiaire du dispositif processeur, d'une image capturée par une caméra de vue latérale (120) du véhicule pendant une opération de virage du véhicule automobile en fonction de la position d'essieu relevable d'au moins un essieu relevable du véhicule automobile ; et
l'affichage de l'image réglée sur un écran d'affichage du véhicule.

17. Procédé selon la revendication 16, dans lequel le réglage de l'image comprend le réglage, par l'intermédiaire du dispositif processeur, d'au moins un azimut (124) et d'un angle d'altitude (128) de la caméra de vue latérale.

18. Procédé selon la revendication 16, dans lequel le réglage de l'image comprend l'application, par l'intermédiaire du dispositif processeur, d'au moins l'un parmi redimensionnement numérique (132a), panoramique numérique (132b) et rotation numérique (132c) d'au moins une partie de l'image capturée par la caméra de vue latérale.

19. Procédé selon la revendication 16, dans lequel le réglage de l'image comprend un panoramique mécanique de la caméra de vue latérale.

20. Procédé selon l'une quelconque des revendications 16 à 18, dans lequel le réglage de l'image est effectué pour maintenir un coin extrême du véhicule automobile à l'intérieur du champ de vision d'une zone de données de l'image affichée sur l'écran d'affichage pendant l'opération de virage.

21. Produit programme informatique (400) permettant d'exploiter un système d'affichage d'un véhicule automobile (200), le produit programme informatique comprenant :
un support non transitoire lisible par ordinateur (410) ;
un code de programme (420) ; et
le code de programme étant stocké dans le support non transitoire lisible par ordinateur qui, lorsqu'il est exécuté par un dispositif processeur, permet au système d'affichage d'effectuer le procédé selon l'une quelconque des revendications 1 à 19.
